# EUROPEAN PATENT APPLICATION

(11) **EP 0 606 729 A2**
(43) Date of publication of application: **20.07.1994**
(21) Application number: 93309864.2
(22) Date of filing: 08.12.1993
(51) Int. Cl.: H04L 12/56, H04Q 11/04

(54) **Asynchronous transfer mode (ATM) expanded internal cell format**

(30) Priority: 11.01.1993 US 2577
(71) Applicant: AT&T Corp., New York, NY 10013-2412 (US)
(72) Inventor: Dominijanni, Dominic, Hampstead, New Hampshire 03841 (US); Pashan, Mark Allen, Wheaton, Illinois 60187 (US)
(74) Representative: Watts, Christopher Malcolm Kelway, Dr.

(57) **Abstract**

An ATM cell is formatted into an expanded internal cell format in order to facilitate switched in a so-called "cell slice" memory based switching architecture. Specifically, the ATM cells are expanded to the internal ATM cell format which is matched to the throughput of the memory based switch architecture and the specific bit assignments within the expanded ATM cell are matched to the cell slice architecture. In one embodiment, the expanded ATM cells are each divided into a plurality of parallel words (e.g. WORD 1) which are, in turn, partitioned into so-called bundles (BUNDLE A, B, C and D). The bundles correspond to the cell slice switch architecture with each bundle being assigned to a particular portion of the switch architecture.

## Description

### Technical Field

This invention relates to digital transmission systems and/or switching systems and, more particularly, to an ATM cell format.

### Background of the Invention

In a co-pending patent application entitled "ASYNCHRONOUS TRANSFER MODE (ATM) SWITCH FABRIC" filed concurrently herewith, a memory based switch arrangement is employed which requires the use of a plurality of circuit cards in order to obtain desired cell buffer memory capacity. The capacity is necessary in order to handle bursty data at high bandwidth and a low ATM cell loss rate. In order to eliminate the need of many bi-directional communications links in such an arrangement, it is necessary to supply ATM cell routing information to a controller in one of the circuit cards, which controller, in turn, controls writing and reading of ATM cell data to and from cell buffer memory on the master circuit card and cell buffer memory on a plurality of additional slave circuit cards. This type of control of the additional slave circuit cards requires only uni-directional communication links from the controller on the master card to the cell buffer memory units on the additional slave circuit cards.

A problem that remains is to have an internal cell format that facilitates such control and writing and reading of the ATM cell data.

### Summary of the Invention

The elimination of the need to use numerous bi-directional communications links in an enhanced cell buffer memory arrangement is facilitated, in accordance with the invention, by employing an expanded internal ATM cell format which is partitioned to supply all control information for data being supplied to all of the circuit cards in the cell buffer memory arrangement, i.e., a master control circuit card and a plurality of cell buffer memory slave circuit cards, directly to a controller in the master circuit card and to supply predetermined other portions of the expanded ATM cell directly to the plurality of slave circuit cards.

In an embodiment of the invention, an ATM cell is expanded to an internal ATM cell format matched to the throughput of the ATM memory based switch arrangement and the specific bit assignments within the expanded ATM cell are matched to a so-called "cell slice architecture" of the memory based ATM switch arrangement.

Specifically, each of the expanded ATM cells is divided into a plurality of words, each word having a predetermined number of bits. Then, each word is partitioned into a plurality of bundles of bits corresponding to the memory based ATM switch cell slice architecture. That is to say, each bundle is assigned to be supplied to a predetermined one of the circuit cards in the memory based ATM switch cell sliced architecture. Additionally, each bundle has an associated parity check bit per expanded ATM cell. Initially, the plurality of parity check bits corresponding to the plurality of bundles are in predetermined bit positions of the expanded ATM cell. The parity bits are then associated on a one-to-one basis, with a corresponding one of the plurality of bundles and employed for fault isolation within the circuit cards of the switching arrangement.

### Brief Description of the Drawings

In the drawing:
FIG. 1 shows, in simplified block diagram form, an expanded ATM cell formatter including an embodiment of the invention;
FIG. 2 shows an internal 54 byte ATM cell format useful in describing the invention;
FIG. 3 shows an internal expanded 56 byte ATM cell format generated in the formatter of FIG. 1.
FIG. 4 shows the expanded 56 byte ATM cell format of FIG. 3 arranged in a sequence of 16, 28 bit parallel words; and
FIG. 5 shows the shuffled bits of each of the 28 bit words of FIG. 4 in forming bundles.

### Detailed Description

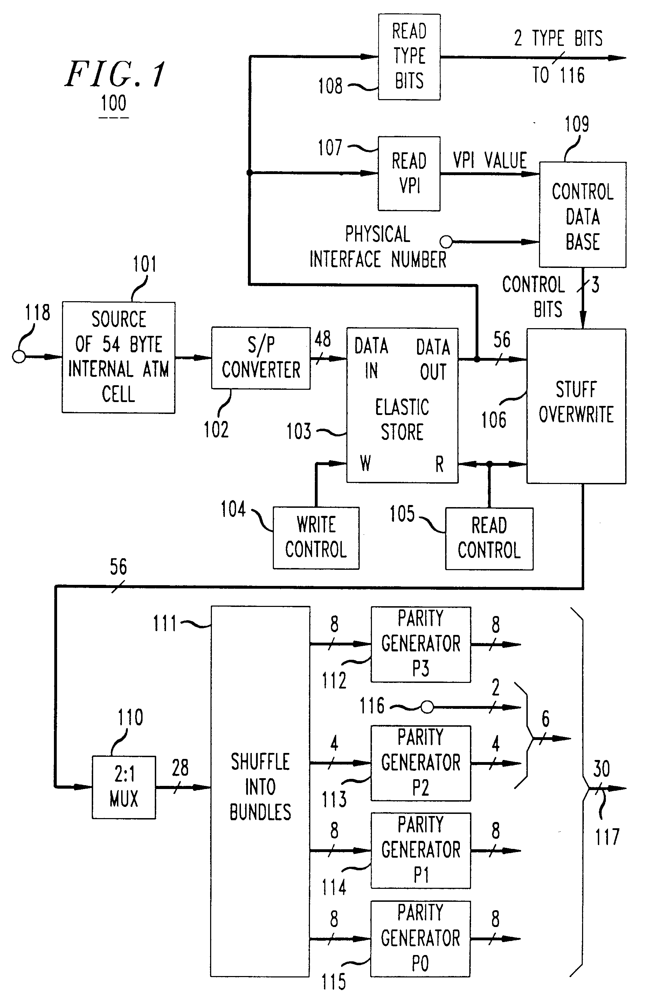

FIG. 1 shows a digital expanded ATM cell formatter 100 including an embodiment of the invention. Specifically, a digital transmission signal carrying normal 53 byte ATM cells is supplied to the source of 54 byte internal ATM cell unit 101. This incoming digital signal may be anyone of a number of incoming digital signals capable of transporting ATM cells in its payload portion. For example, the digital transmission signal could be a digital synchronous hierarchy (SDH), signal or a SONET digital signal. In this example, it is assumed that the ATM cells are being transported in an STM-1 SDH digital signal of a type known in the art. It is noted that the standard 53 byte ATM cell is defined in CCITT Recommendation I.361, entitled "B-ISDN ATM LAYER SPECIFICATION" dated July, 1992 and the STM-1 digital signal format is described in CCITT Recommendation G.709, entitled "Synchronous Multiplexing Structure" dated 1988.

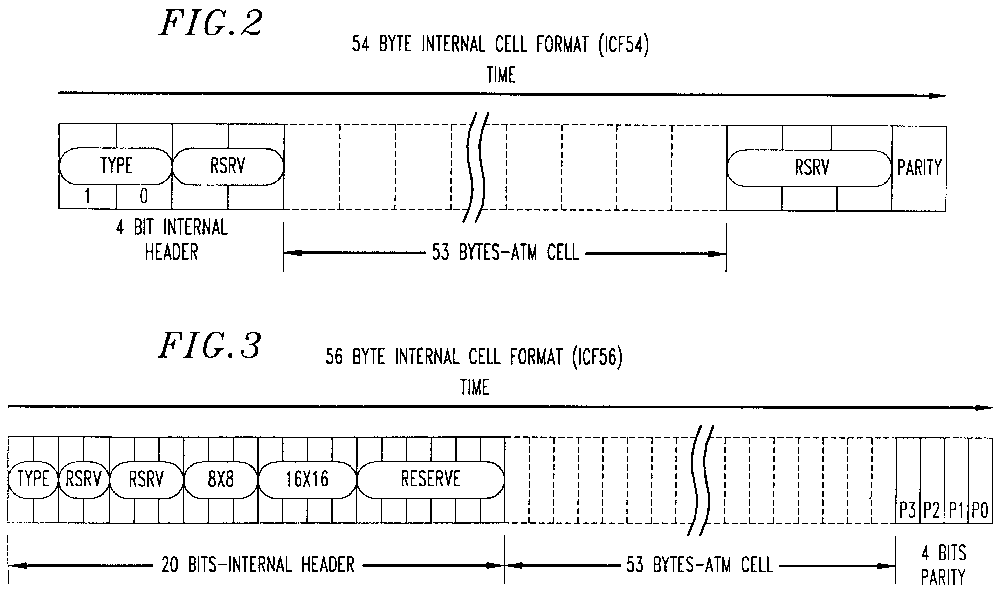

The output of source of 54 byte internal ATM cell unit 101 is a cell structured as shown in FIG. 2. An arrangement for generating such an internal 54 byte ATM cell format as shown in FIG. 2, is described in a co-pending patent application entitled "ASYNCHRONOUS TRANSFER MODE (ATM) PAYLOAD SYNCHRONIZER". For brevity and clarity of exposition only a single ATM cell stream is shown and described. It will be apparent to those skilled in the art that a number (e.g., 16) of such ATM cell streams may be combined, i.e., multiplexed together, for internal processing. The internal 54 byte ATM cells are supplied from unit 101 to serial-to-parallel (S/P) converter 102. S/P converter 102 converts the internal 54 byte ATM cell into parallel words, each having 48 bits. In turn, these 48 bit parallel words are written into elastic store 103 under control of write control 104 such that nine (9) consecutive 48 bit parallel words are written in during an ATM cell interval. In turn, the stored bits of the internal 54 byte ATM cell are read out as 56 bit parallel words under control of read control 105 during an ATM cell interval. In order to expand the internal 54 byte ATM cell stored in elastic store 103 to an expanded 56 byte ATM cell, eight (8) 56 bit words are read out in an ATM cell interval. The first 56 bit parallel word being read out includes the two (2) type bits and two (2) reserve (RSRV) bits from the internal 54 byte ATM cell shown in FIG. 2, 16 stuffed bits (i.e., 2 bytes) and 36 data bits. The next six (6) of the 56 bit parallel words transport ATM cell data, while the last parallel word transports 52 bits of data and includes 4 bit positions for parity check bits, to be described below.

This expanded 56 byte internal ATM cell is shown in FIG. 3. Note that the expanded 56 byte ATM cell is comprised of a 20 bit header including the two (2) type bits, then five (5) reserve (RSRV) bits, a "8 × 8" control field, a "16 × 16" control field (not important to this invention) and six (6) additional reserved bits, 53 bytes including the standard ATM cell and four (4) parity bits.

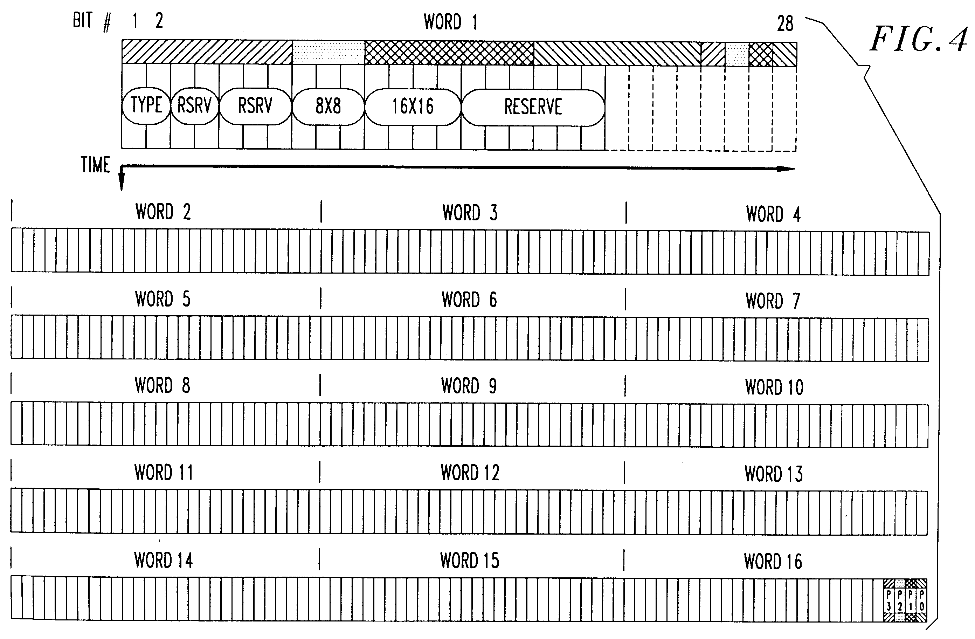

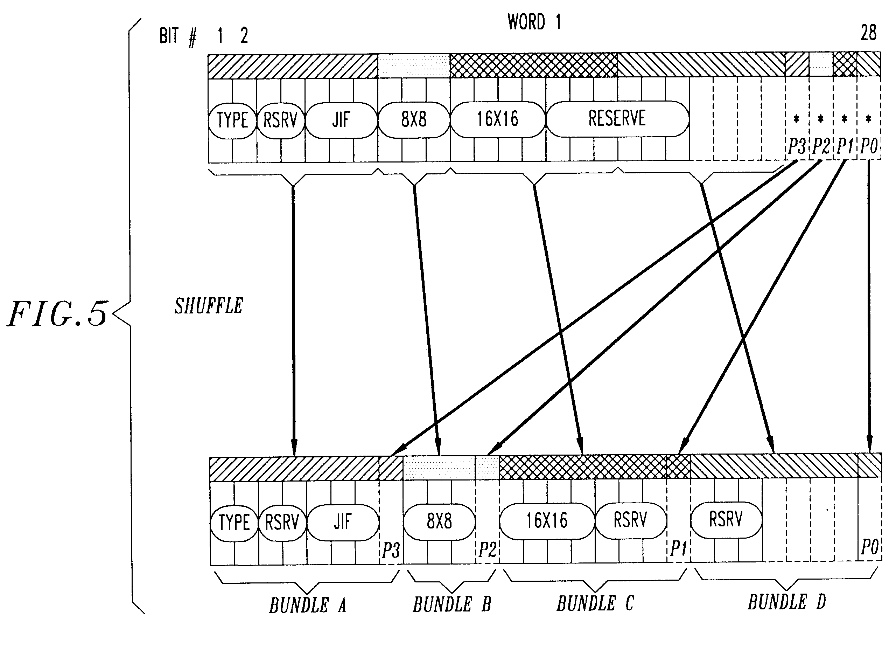

Referring again to FIG. 1, the 56 bit parallel words being read from elastic store 103 are supplied to stuff overwrite unit 106, to read VPI (i.e., virtual path identifier) unit 107 and to read type bits unit 108. It is noted that knowing the specific physical interface number for the incoming signal and the ATM VPI value, the destination of the ATM cells can be obtained from control data base 109. The VPI value for a network-to-network interface ATM cell structure is in the first 12 bits of the ATM cell header, as defined in CCITT Recommendation I.361. That is, the routing control information for the ATM cell in the memory based ATM switch architecture can be obtained In this particular example, the memory based ATM switch architecture described in the above noted co-pending patent application entitled "ASYNCHRONOUS TRANSFER MODE (ATM) SWITCH FABRIC" is an "8 × 8" switch having eight (8) inputs and eight (8) outputs. Consequently, three bit positions are needed to carry the routing control information. The three (3) control bits for the ATM cell are supplied to stuff overwrite unit 106, and under control of read control 105 overwrite three (3) of the stuffing bit positions in the header of the expanded 56 byte ATM cell format. This control field is shown as an "8 × 8" field in the header of the expanded 56 byte ATM format shown in FIG. 3. The 56 bit parallel words are then supplied from stuff overwrite unit 106 to 2:1 multiplexer (MUX) 110 to obtain 28 bit parallel words. The 28 bit parallel words are supplied to shuffle into bundles unit 111 which arranges the bits in each 28 bit word into predetermined bundles. FIG. 5 illustrates the shuffling for word one (1) of the expanded 56 byte ATM cell. As shown in FIG. 4, it is noted that each expanded 56 byte ATM cell is comprised of 16, 28 bit parallel words. The first word includes the expanded ATM cell header and the 16th word includes four parity bit positions.

It should be noted that although FIG. 5 shows the first word as including parity bit positions P0, P1, P2 and P3, actual parity bits are only transported in word 16. As shown in FIG. 5, bundle A includes bit positions 1 through 7 and bit position 25 of each word, bundle B includes bit positions 8 through 10 and bit position 26 of each word, bundle C includes bit positions 11 through 17 and bit position 27 of each word and bundle D includes bit positions 18 through 24 and bit position 28 of each word. Bundle A is supplied as eight (8) parallel bits from shuffle into bundles unit 111 to parity generator P3 112. Bundle B is supplied as four (4) parallel bits from shuffle into bundles unit 111 to parity generator P2 113. Bundle C is supplied as eight (8) parallel bits from shuffle into bundles unit 111 to parity generator P1 114. Bundle D is supplied as eight (8) parallel bits from shuffle into bundles unit 111 to parity generator P0 115. Each of parity generators 112 through 115 generates parity, in known fashion, for its corresponding bundle A through bundle D, respectively, over the sequence of 16, 28 bit parallel words comprising the expanded 56 byte ATM cell. Parity generators 112 through 115 supply as outputs bundles A through D, respectively, as 28 bit parallel words. Each expanded 56 byte ATM cell, as noted above, comprises a sequence of 16 such 28 bit parallel words with the parity bit for each bundle being transported in the 16th word only. Additionally, it is noted that the two (2) type bits from read type bits unit 108 are supplied via 116 as an output along with the four (4) bits in bundle B, thereby forming a six (6) bit bundle. Consequently, the parallel words being supplied as an output from expanded ATM cell formatter 100 via 117 are actually 30 bits parallel words.

## Claims

1. Apparatus for generating expanded asynchronous transfer mode (ATM) cells from a synchronous digital signal, for example a SDH, SONET or the like digital signal, having a predetermined clock rate and transporting ATM cells, comprising:
means for storing incoming ATM cells being transported by said synchronous digital signal, said stored incoming ATM cells to be supplied as an output, each of said incoming ATM cells having a predetermined number of bytes and each byte including a predetermined number of bits;
means for increasing said number of bytes in said incoming ATM cells to be supplied as an output to form internal ATM cells;
means for generating and inserting additional internal ATM cells to be supplied as an output so that a clock rate equal to that of said incoming synchronous digital signal clock rate may be used as a read clock for outputting said internal ATM cells from said means for storing;
means for adding a predetermined number of bytes to said internal ATM cell to form expanded ATM cells;
means for obtaining routing control information for each of said incoming ATM cells;
means for inserting said routing control information for a particular incoming ATM cell in predetermined bit positions of the added bytes in corresponding expanded ATM cell transporting said particular incoming ATM cell; and
means for partitioning said bytes of said expanded ATM cells into a plurality of predetermined bundles, wherein said routing control information for said particular incoming ATM cell is transported in a prescribed one of said bundles.

2. The apparatus of claim 1 wherein said predetermined number of bytes in said incoming ATM cells is 53 bytes.

3. The apparatus of claim 2 wherein each of said internal ATM cells has 54 bytes.

4. The apparatus of claim 3 wherein each of said 54 byte internal ATM cells is converted by a serial-to-parallel converter into a 48 bit parallel word.

5. The apparatus of claim 4 wherein said means for storing includes an elastic store under control of a write controller so that nine of said 48 bit parallel words are consecutively written into said elastic store during an ATM cell interval.

6. The apparatus of claim 5 wherein said means for expanding includes means for reading out eight 56 bit parallel words from said nine stored 48 bit parallel words into each of said expanded ATM cells.

7. The apparatus of claim 6 wherein each of said expanded ATM cells comprises a 20 bit header including two type bits, five reserve bits, an 8 by 8 control field, a 16 by 16 control field, six additional reserved bits, a 53 byte ATM cell, and four parity bits.

8. The apparatus of claim 7 wherein said means for obtaining routing control information includes means for receiving a physical interface number from said incoming ATM cells transported by said synchronous digital signal.

9. The apparatus of claim 8 wherein said means for obtaining routing control information further includes means for generating a virtual path identifier value from said 56 bit parallel words read from said elastic store.

10. The apparatus of claim 6 wherein each of said expanded ATM cells is arranged into a sequence of 16, 28 bit parallel words wherein each 28 bit parallel word has 28 bit positions.

11. The apparatus of claim 10 wherein said 28 bit parallel words are generated by multiplexing said 56 bit parallel words.

12. The apparatus of claim 11 wherein said means for partitioning said bytes of said expanded ATM cells into said plurality of predetermined bundles includes means for shuffling said bits of said 16, 28 bit parallel words into said bundles.

13. The apparatus of claim 10 wherein a first of said 16, 28 bit parallel words includes an expanded ATM cell header and a last of said 16, 28 bit parallel words includes four parity bit positions.

14. The apparatus of claim 10 wherein said plurality of bundles includes a first bundle, a second bundle, a third bundle and a fourth bundle wherein said first bundle includes bit positions 1 through 7 and bit position 25 of each of said 28 bit parallel words, said second bundle includes bit positions 8 through 10 and bit position 26 of each of said 28 bit parallel words, said third bundle includes bit positions 11 through 17 and bit position 27 of each of said 28 bit parallel words, and said fourth bundle includes bit positions 18 through 24 and bit position 28 of each of said 28 bit parallel words.
